# EUROPÄISCHE PATENTANMELDUNG

(11) **EP 0 902 444 A1**
(43) Veröffentlichungstag der Anmeldung: **17.03.1999**
(21) Anmeldenummer: 98115708.4
(22) Anmeldetag: 20.08.1998
(51) Int. Cl.: H01F 7/02, F02M 27/04, F23K 5/08, C02F 1/48

(54) **Anordnungen zur magnetischen Behändlung von flüssigen oder gasförmigen Medien, sowie zugehörige Verwendungen**

(30) Priorität: 10.09.1997 DE 19739629; 23.03.1998 DE 19812667
(71) Anmelder: SCS Schneider GmbH, 91052 Erlangen (DE)
(72) Erfinder: Schneider, Marcus, 91052 Erlangen (DE); Krause, Andreas, 91052 Erlangen (DE)
(74) Vertreter: MEISSNER, BOLTE & PARTNER Patentanwälte

(57) **Zusammenfassung**

Die Erfindung betrifft eine Anordnung zur magnetischen Ionisierung von flüssigen oder gasförmigen Medien. Um mit einem kaum spürbaren konstruktiven Mehraufwand eine wesentliche, signifikante Verbesserung der hiermit behandelten Medien zu erzielen, und somit auch die Einsatzmöglichkeiten einer solchen Anordnung in der Praxis erweitern zu können, ist vorgesehen, daß zwei einander gegenüberliegende Module (A, B) in Form von Halterungen bevorzugt gleicher Größe und Form mit an- oder eingebauten Permanentmagneten (5) aus Seltenerdenmagneten oder Magneten aus einem Werkstoff, der die gleiche magnetische Flußstärke erbringt, wie die Seltenerdenmagneten, vorgesehen sind, daß diese Halterungen Anlageflächen (1') für eine das Medium führende Leitung (11) aufweisen und daß der oder die Permanentmagnet(e) der einen Halterung (A) mit ihrem N-Pol zu deren Anlagefläche (1') gerichtet ist, bzw. sind, während der oder die Permanentmagnet(e) der anderen Halterung (B) mit ihrem S-Pol zu dessen Anlagefläche (1') gerichtet ist bzw. sind.

## Beschreibung

Die Erfindung betrifft zunächst eine Anordnung zur magnetischen Ionisierung von flüssigen oder gasförmigen Medien. Insbesondere, aber nicht ausschließlich, ist dabei an die magnetische Ionisierung eines kohlenwasserstoffhaltigen Treibstoffes gedacht. Hierzu ist es bekannt, mit entweder elektromagnetisch oder durch Eisenmagnete erzeugten Magnetfelder in einer flüssigen Treibstoff führenden Leitung ein dauermagnetisches Feld aufzubauen und somit den Treibstoff magnetisch zu ionisieren. Hiermit ändert sich die Ausrichtung der im Treibstoff befindlichen Kohlenwasserstoffmoleküle. Bei der Ionisierung, auch Ionisation genannt, werden Ionen durch Abtrennung und/oder Anlagerung eines oder mehrerer Elektronen an ein neutrales Atom oder Molekül gebildet. Im Falle der Abtrennung ist das gebildete Ion ein- oder mehrfach positiv geladen, im Fall der Anlagerung ein- oder mehrfach negativ, je nachdem ob ein oder mehr als ein Elektron abgetrennt oder angelagert wurde. Die Ionisierung erfolgt aufgrund der Feldionisierung, bei der starke inhomogene Felder auf elektrisch/magnetische Art und Weise gebundene Elektronen aus ihren Bindungspotentialen herauslösen. Durch die Abtrennung von Ionen werden die Kohlenwasserstoffmoleküle positiv aufgeladen, um den von Natur aus negativ geladenen Sauerstoff energiearmer an sich ziehen zu können.

Dies wurde beispielsweise angewendet bei sogenannten Pipelines, d.h. Überlandtransport von Öl. Nachteilig ist, daß die dabei vorgesehenen Mittel zur Erzeugung des Magnetfeldes sehr aufwendig waren. Da diese Pipelines aus Stahlrohren bestanden, welche die magnetischen Feldlinien von aus Eisen bestehenden Permanentmagneten im wesentlichen absorbierten, war die Erzeugung eines entsprechend starken elektromagnetischen Feldes durch Elektroinstallationen und außerdem eine entsprechend leistungsstarke Stromquelle erforderlich. Zur Magnetisierung von Treibstoffen für Flugzeugmotoren gebräuchliche Eisenmagnete waren in ihrer Koerzitivkraft so gering, daß die erzielte Qualitätsverbesserung des Treibstoffes nur sehr geringfügig war. Schließlich bestand beim Stand der Technik der Nachteil, daß man die Magnetpole so angeordnet hatte, daß ihre Magnetkräfte sich abstießen. Hiermit ergab sich ein Verlauf der Magnetfeldlinien, der für das angestrebte Ziel der Magnetisierung des Treibstoffes sehr ungünstig und uneffektiv war. Eine solche Anordnung ist aus GB 2256091 A bekannt. Hinzu kommt der Nachteil, daß mit einer Erhöhung der Magnetkraft, d.h. Verstärkung des Magnetfeldes, die Abstoßung der Magnetkräfte der Magnetpole sich noch vergrößert. Man kann also nicht versuchen, durch ein stärkeres Magnetfeld auch zu einer stärkeren Magnetisierung zu kommen. Außerdem werden als Magneten ferrokeramische Magnetwerkstoffe vorgesehen, deren Magnetisierung wesentlich geringer ist als die mit der Erfindung vorgeschlagenen Seltenerden-Magneten. Schließlich ist nachteilig, daß die Magneten selber direkt an der Leitung angreifen müssen. Dies kann zu einer Beschädigung der Magneten führen. Aus WO 96/10692 ist zwar eine Anordnung von Magneten derart vorgesehen, daß ein anziehendes Magnetfeld aufgebaut wird. Doch zeigt diese Literaturstelle nur solche Positionierungen der Magnete zu der das Medium führenden Leitung, daß nur ein relativ geringer Teil des Innenquerschnittes dieser Leitung auch tatsächlich von den Magnetfeldlinien durchsetzt wird. Der Effekt bzw. Wirkungsgrad einer solchen Anordnung ist somit schlecht.

Demgegenüber besteht die Aufgaben- bzw. Problemstellung der Erfindung darin, eine Anordnung zur magnetischen Ionisierung von flüssigen oder gasförmigen Medien zu schaffen, bei der mit einem kaum spürbaren konstruktiven Mehraufwand eine wesentliche, signifikante Verbesserung der hiermit behandelten Medien erzielt wird und somit auch die Einsatzmöglichkeiten einer solchen Anordnung in der Praxis erweitert werden können.

Zur Lösung dieser Aufgabenstellung ist gemäß Anspruch 1 eine Anordnung derart vorgesehen, daß zwei einander gegenüberliegende Module in Form von Halterungen gleicher Größe und Form mit an- oder eingebauten Permanentmagneten in Form von Seltenerdenmagneten oder von Magneten aus einem Werkstoff, der die gleiche magnetische Flußstärke erbringt, vorgesehen sind, daß diese Halterungen Anlageflächen für eine das Medium führende Leitung aufweisen und daß der oder die Permanentmagnet(e) der einen Halterung mit ihrem N-Pol zu deren Anlagefläche gerichtet ist bzw. sind, während der oder die Permanentmagnet(e) der anderen Halterung mit ihrem S-Pol zu dessen Anlagefläche gerichtet ist bzw. sind. Diese beiden Halterungen können um die Mediumleitung herumgelegt werden, wobei aufgrund der angegebenen Positionierung der Magnete und deren N- bzw. S-Pole ein den Querschnitt der Mediumleitung durchsetzendes, anziehendes Magnetfeld geschaffen ist.

Solche Halterungen sind, wie auch die späteren Ausführungen zeigen, in ihrer Handhabung praktisch, verlangen wenig Raum und schaffen eine optimale und ständig in eine Richtung gehende, anziehende Magnetisierung des Leitungsquerschnittes und damit des darin strömenden Mediums. Dieses anziehende Magnetfeld ergibt zum einen eine entsprechend starke Ionisierung. Außerdem wird hierdurch eine gewisse Anziehungskraft zwischen den beiden Halterungen in der Betriebslage erreicht. Diese Anziehungskraft wird dann wesentlich verstärkt, falls die Rohrleitung aus Stahl besteht. Es ist ein weiterer Vorteil der Erfindung, daß auch bei einer Rohrleitung aus Stahl die im Rohrinnern gebildete Magnetkraft stark genug ist, um trotz der durch die Rohrwandung gegebenen Abschirmung eine hinreichend große magnetische Flußdichte im Rohrquerschnitt aufzubauen. Wesentlich ist auch die Verwendung der Seltenerdenmagneten bzw. gleichwertiger Magnetstoffe. Sie haben gegenüber Eisen eine wesentlich höhere magnetische Flußdichte, z.B. in der Größenordnung von 11.000 bis 12.000 Gauß, wobei Anspruch 20 bevorzugte praktische Ausführungsformen von zum Einsatz kommenden Seltenerdenmagneten angibt. Es hat sich überraschenderweise gezeigt, daß bei der Verwendung von flüssigen oder gasförmigen Treibstoffen als Medium eine 10-15%ige Erhöhung der Leistungsabgabe bei gleicher Verbrauchsmenge an Treibstoff erzielt wird. Es ergibt sich dabei eine Optimierung der Kohlenwasserstoff-Sauerstoffverbindung des betreffenden Treibstoffes und eine in der vorgenannten besseren Leistungsabgabe resultierende Erhöhung des Wirkungsgrades der Verbrennung. Bei einem bevorzugten Einsatzgebiet der Erfindung, nämlich Verbrennungsmotoren, insbesondere Verbrennungsmotoren für Kraftfahrzeuge, werden damit folgende Vorteile erzielt: Schnelleres Erreichen der Btriebstemperatur, saubere Verbrennung, homogenere Arbeitsweise der Triebwerke, Reduzierung der Abgasemmision von Kohlenmonoxid, Abbau und/oder sogar Verhinderung der Neuanlagerung von Verbrennungsrückständen im Verbrennungsraum, Erhöhung der Lebensdauer der Verbrennungsaggregate und Erhöhung der Flammtemperatur in den Verbrennungsaggregaten. Die beiden Merkmale des Anspruches 1, nämlich die Schaffung eines anziehenden Magnetfeldes und der hiermit entstehende, für die Lösung der Aufgabe vorteilhafte Verlauf der magnetischen Feldlinien, sowie in Verbindung hiermit die durch die Seltenerdenmagneten erzeugte hohe magnetische Flußdichte wirken somit zusammen mit dem Ergebnis einer sehr intensiven Ionisierung des Treibstoffes und zwar auch dann, wenn die den Treibstoff führende Rohrleitung aus Stahl besteht.

Die aufwendigen Elektroinstallationen und das Bereithalten einer Stromquelle für eine elektromagnetische Erzeugung der Magnetkraft entfallen. Wie aus den späteren Ausführungen hervorgeht ist die Erfindung in einer baulich sehr einfachen und raumsparenden Weise gerätemäßig zu verwirklichen.

In einer bevorzugten Ausführungsform der Erfindung gemäß Anspruch 2, welche noch gemäß Anspruch 3 vervollkommnet werden kann, ist sowohl für eine vorteilhafte Anbringung und Halterung der Permanentmagnete als auch für eine magnetische Abschirmung nach außen gesorgt. Diese Abschirmung verhindert, daß Magnetkraftlinien nach außen wandern. Da ein Hauptanwendungsgebiet der Erfindung die Ionisierung von Brennstoffen für Kraftfahrzeuge ist und hierzu die Anordnung nach der Erfindung an den Zufuhrleitungen des Brennstoffes anzubringen ist, hätten nämlich nach außen auftretende Magnetkraftlinien die Folge, daß sie die im Kraftfahrzeug, insbesondere im Motorraum, in vielfacher Form vorhandene Elektronik stören oder sogar unbrauchbar machen.

In der bevorzugten Ausführungsform nach Anspruch 4 sind die Magnete in ihrer Richtung und damit in der Hauptrichtung des von ihnen gebildeten Magnetfeldes so positioniert, daß über den Leitungsquerschnitt ein nahezu gleichmäßiges Magnetfeld geschaffen wird. Dies kann baulich-konstruktiv in einfacher Weise durch die Merkmale des Anspruches 5 vervollkommnet werden.

Die Erfindung ist in verschiedener Weise einsetzbar bzw. anwendbar. Insbesondere ist an flüssige oder gasförmige Treibstoffe und dabei an Treibstoffe eines Verbrennungsmotors gedacht (siehe Anspruch 10). Gemäß Anspruch 13 ist auch die Verwendung zur magnetischen Ionisierung des Brennstoffes eine Heizung denkbar, sowie gemäß Anspruch 16 des Gases einer Gasheizung.

Gemäß Anspruch 17 und folgende besteht auch die Möglichkeit der Verwendung zur Ionisierung von kalkhaltigem Wasser. Durch eine entsprechend starke Ionisierung von Kalkablagerungen im Wasser werden die Kalkpartikel so weit zerstört bzw. zerkleinert, daß sie im Wasser schweben und sich nicht mehr in kristalliner Form an den Innenwänden der von diesem Wasser durchflossenen Rohrleitungen ablagern. Solche Ablagerungen führen im Laufe der Zeit zu einer Verengung des Durchflußquerschnittes der Rohre mit der Folge, daß das Wasser nicht oder nur noch mit einem zu geringen Druck den betreffenden Rohrleitungen entnommen werden kann. Diese Rohrleitungen müssen entweder mit einem erheblichen Aufwand gereinigt oder durch neue Rohre ersetzt werden. Da in der Regel in Gebäuden, insbesondere Wohngebäuden Wasserrohre sich im Mauerwerk, d.h. Unterputz befinden, verbietet sich in der Regel der Ersatz der Rohrleitungen wegen des hiermit verbundenen Aufwandes des Herausschlagens von Mauerwerk zur Entnahme der alten Leitungen und des Verputzens der neuen Leitungen, des Aufbringens eines neuen Anstriches oder Tapezierung. Hinzu kommen der Ärger und weiterer Arbeitsaufwand, um die damit verbundene Verschmutzung der betreffenden Räume zu säubern. Es ist also ein wesentlicher Vorteil der Erfindung, wenn hierdurch die vorgenannten Nachteile vermieden werden. Erwähnt sei, daß man eine Ionisierung von kalkhaltigem Wasser mittels elektrischen Wechselmagnetfeldern kennt. Nachteiligerweise sind die hierzu gehörenden erforderlichen Geräte relativ teuer und nehmen ferner einen relativ großen Raum ein. Die Vorteile dieser Anordnung bestehen auch hier aus ihrem geringen Raumbedarf und ihrem einfachen Aufbau. Sie sind also mit geringen Kosten herstellbar. Dies ist auch im Hinblick auf den zuletzt genannten Einsatzzweck, nämlich bei Wasserinstallationen in Wohnungen bzw. in Wohngebäuden wesentlich. Schließlich ist auch in diesem Fall zu berücksichtigen, daß eine permanent in eine Richtung gehende Magnetisierung effektiver als eine durch Wechselstrom betriebene, dauernd ihre Richtung ändernde Magnetisierung ist.

Anspruch 20 beinhaltet bei der Ausübung der Erfindung vorteilhafte Werkstoffe für die eingesetzten Permanentmagneten.

Lt. Anspruch 18 ist eine Anordnung gemäß Anspruch 17 am Warmwasserausgang eines Wassererhitzers, z.B. eines Boilers, vorgesehen. Dabei ist insbesondere an einen zentralen Brauchwassererwärmer gedacht, dessen Warmwasserausgang über längere Leitungen den einzelnen Abnahmestellen eines Gebäudes zugeführt wird. Insbesondere erwärmtes, kalkhaltiges Wasser neigt nämlich dazu, sich beim Durchfließen von Leitungen an deren Innenwänden anzusetzen.

Anstelle oder zusätzlich der Lehre nach Anspruch 18 kann gemäß Anspruch 19 eine Anordnung nach der Erfindung auch am Kaltwassereingang einer Installationsanlage, insbesondere eines Gebäudes vorgesehen werden, um von vornherein, also bereits bei den Eingangsleitungen die schädlichen Kalkablagerungen soweit als möglich zu vermeiden.

Ferner befaßt sich die Erfindung gemäß den Ansprüchen 21 bis 23 mit einer Verstärkung der Polschuhe, die sich an den außen gelegenen Seiten der Permanenmagnete befinden. Dies hat eine entsprechende Verstärkung der vorstehend bereits erläuterten magnetischen Abschirmung nach außen zur Folge. Dies kann sowohl bei der Ionisierung von kalkhaltigem Wasser als auch bei der Ionisierung von kohlenwasserstoffhaltigem Treibstoff mit Erfolg eingesetzt werden.

Weitere Vorteile und Merkmale der Erfindung sind den weiteren Unteransprüchen, sowie der nachfolgenden Beschreibung und der zugehörigen Zeichnung von erfindungsgemäßen Ausführungsmöglichkeiten zu entnehmen. In der Zeichnung zeigt:
- Fig. 1:: einen Querschnitt durch eine der Halterungen gemäß der Linie I-I in Fig. 2,
- Fig. 2:: eine Draufsicht auf eine der Halterungen,
- Fig. 3:: eine Unteransicht einer der Halterungen,
- Fig. 4:: zwei Halterungen in Betriebslage an einer Rohrleitung,
- Fig. 5:: die perspektivische Ansicht einer der Halterungen mit eingelegtem Anpassungsstreifen.
- Fig. 6:: eine Positionierung der Anordnung nach der Erfindung an Zu- und Ableitungen einer Installationsanlage in einem Gebäude,
- Fig. 7:: ein Ausführungsbeispiel der Anordnung nach der Erfindung in einem Schnitt gemäß der Linie VII-VII in Fig. 6.
- Fig. 8:: ein weiteres Ausführungsbeispiel der Anordnung nach der Erfindung in einem Schnitt analog der Linie VII-VII in Fig. 6.

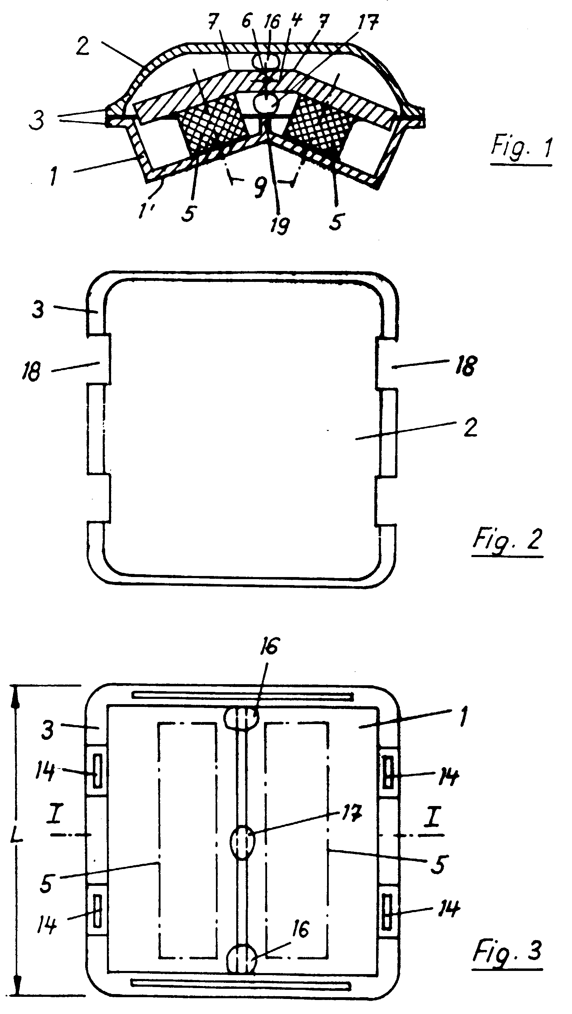

Fig. 1 zeigt im Querschnitt den Aufbau einer Halterung nach der Erfindung zwischen einem unteren Gehäuseteil 1 und einem oberen Gehäuseteil 2, die an ihren Rändern 3 miteinander verbunden sind. Im Gehäuse befindet sich ein plattenförmiger Polschuh 4 aus Stahl, an den zwei Permanentmagnete 5 angeklebt sind. Diese Permanentmagnete bestehen aus einem Seltenerdenmagnetmaterial, z.B. Neodym-Eisen-Bor Legierung (NdFeB) oder Samarium-Cobalt. Die Länge der Magneten 5 ist der strichpunktierten Darstellung in Fig. 3 zu entnehmen. Sie erstrecken sich im wesentlichen über die gesamte Länge der Länge L der Halterung. Durch Änderung des Querschnittes und/oder der Länge der Permanentmagnete 5 kann die Stärke des von ihnen gebildeten Magnetfeldes entsprechend gewählt werden.

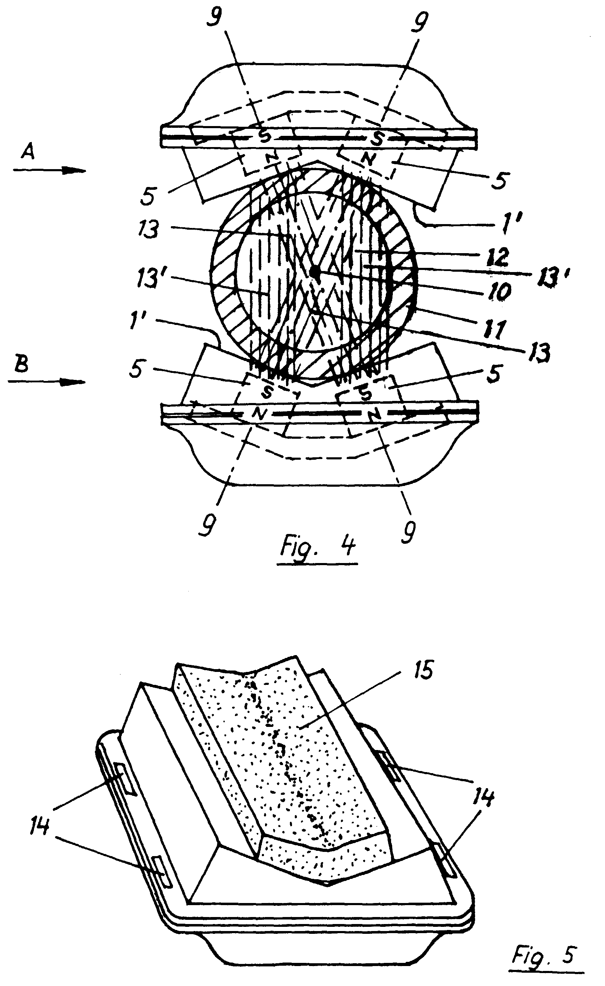

Der Polschuh 4 ist gemäß diesem Ausführungsbeispiel nahe seiner Mittellängslinie 6 an den Stellen 7 abgewinkelt, so daß an den durch diese Abwinkelungen entstandenen Flächen 8 die Permamentmagneten 5 angebracht und mit ihrer magnetischen Längsachse 9 so ausgerichtet sind, daß sich nach Anbringung der Halterung an einer das Medium führenden Rohrleitung diese Längsachsen 9 etwa in der Mittellängsachse 10 der Rohrleitung 11 treffen und einen entsprechenden Winkel miteinander bilden (siehe Fig. 4). Da Halterungen mit vorgegebenenen Abmessungen an Leitungen 11 unterschiedlichen Durchmessers anzubringen sind, wird das o.g. Treffen der magnetischen Längsachsen 9 exakt in der Mittellängsachse 10 der Rohrleitung nur bei einem hierzu passenden Außendurchmesser der Rohrleitung 11 der Fall sein. Trotzdem werden die in Fig. 4 angedeuteten Magnetlinien 13 auch bei Beibehaltung der Außenabmessungen der Halterungen einerseits und anderen Außendurchmessern der Leitung 11 als in Fig. 4 dargestellt andererseits immer noch den vom Medium durchströmten Innenraum 12 nahezu gleichmäßig mit den Magnetfeldlinien 13 durchsetzen. Dies hat die eingangs erläuterte, angestrebte Verbesserung des Treibstoffes zur Folge.

Wie insbesondere Fig. 4 zeigt sind zwei Module an der Rohrleitung an sich gegenüberliegenden Seiten angebracht und zwar ein "Nord"-Modul A in Fig. 4 oben und ein "Süd"-Modul B in Fig. 4 unten, welche die Permanentmagnete 5 mit der gewünschten magnetischen Polarität und der bereits erläuterten vorteilhaften Position an der Rohrleitung 11 halten. Durch das Anliegen dieser beiden Module bzw. Halterungen ergibt sich ein gleichgerichtetes und anziehendes dauermagnetisches Feld durch den Leitungsquerschnitt 12 hindurch mit der angestrebten Folge einer magnetischen Ionisierung des Mediums. Hierbei ist wesentlich, daß eine Magnetisierung stets in der gleichen Richtung erfolgt. Dies ist durch die Positionierung der Magnete 5 erreicht, wobei die Magnete 5 des in Fig. 4 oberen Modules A mit ihren N-Polen zur Rohrleitung hin gerichtet sind, während die Magnete 5 des in Fig. 4 unteren Modules B mit ihren S-Polen zur Rohrleitung 11 hin ausgerichtet sind. Dies bedeutet, daß, wie mit den Magnetfeldlinien 13 angedeutet, Magnetfeldlinien von dem in Fig. 4 oben links gelegenen N-Pol (Modul A) dem in Fig. 4 unten rechts gelegenen S-Pol (Modul B), sowie von dem in Fig. 4 rechts oben gelegenen N-Pol zu dem in Fig. 4 links unten gelegenen S-Pol verlaufen. Außerdem verlaufen gemäß Ziffer 13' auch magnetische Feldlinien von dem oben rechts gelegenen N-Pol zu dem unten rechts gelegenen S-Pol, sowie von dem oben links gelegenen N-Pol zu dem unten links gelegenen S-Pol. Hiermit wird eine nahezu komplette Durchsetzung des Querschnittes 12 mit Magnetfeldlinien 13, 13' erreicht. Dabei bewirkt das Vorhandensein eines anziehenden Magnetfeldes einen nahezu geradlinigen Verlauf der Magnetfeldlinien zwischen den N-Polen und den S-Polen (siehe Fig. 4). Die vorgenannten, miteinander das Magnetfeld 13, 13' bildenden N- und S-Pole liegen in etwa an den Ecken eines Rechteckes oder Quadrates. Außerdem wird somit ein anziehendes Magnetfeld aufgebaut.

Die beiden Module bzw. Halterungen A, B haben, wie ebenfalls Fig. 4 zeigt, bevorzugt die gleichen Größen und Abmessungen, wobei aber die Stärke der Magnetkraft durch die o.g. Wahl der Länge der Magneten den jeweiligen Anforderungen angepaßt werden kann. In Anpassung an die erläuterte Formgebung der Polschuhe 6 ist der in Fig. 1 untere Gehäuseteil 1, der gemäß Fig. 4 zur Anlage an die jeweilige Rohrleitung bestimmt, so konkav abgewinkelt, daß beide Abwinkelungen etwa parallel zu den abgewinkelten Bereichen 8 der Polschuhe 4 verlaufen. Das gleiche gilt für den in den Fig. 1 und 4 dargestellten oberen Gehäuseteil 2. Somit können die an dem jeweiligen Polschuh 4 angebrachten Magnete 5 mit ihren jeweiligen Polaustrittsflächen praktisch an dem unteren Gehäuseteil 1 anliegen. Hierdurch ergibt sich in der Betriebslage die erwünschte Ausrichtung der Längsmittelachse 9 der Magnete (siehe Fig. 4).

Die Polschuhe 4 sind als Stahlplatten von einer solchen Dicke, z.B. 5 mm, ausgebildet, daß sie die Permanentmagnete 5 nach außen magnetisch abschirmen. Die Polschuhe sind entweder zwischen den beiden Gehäuseteilen 1, 2 eingeklemmt oder mit zumindest einem der Gehäuseteile durch eine Verklebung verbunden. Eine bevorzugte Ausführung einer Verklebung besteht in dem Einfügen einer entsprechenden Menge an Silikon. Dies kann gemäß den Ziffern 16 zwischen dem oberen Gehäuseteil 2 und dem Polschuh 4, sowie durch eine Silikonmasse 17 zwischen dem unteren Gehäuseteil 1 und dem Polschuh 4 geschehen. Die beiden Gehäuseteile 1, 2 sind aus Kunststoff.

In der bevorzugten Ausführungsform der Erfindung sind die beiden Halterungen separate Module, welche entweder durch die Magnetkraft nach Aufsetzen auf die Leitung 11 sich von selber fest daran halten. Dies gilt aufgrund der hier erfindungsgemäß zur Verwendung kommenden Permanentmagnete insbesondere dann, wenn das Rohr 11 aus Stahl besteht. Alternativ oder zusätzlich können in der Zeichnung nicht dargestellte Kabelbinder vorgesehen sein, welche durch seitliche, ösenartige Schlitze 14 des unteren Gehäuseteiles 1 gesteckt und um die beiden in der Betriebslage (Fig. 4) befindlichen Halterungen herumgeschlungen und festgezurrt werden. Die Kabelbinder legen sich dabei in entsprechende Ausnehmungen 18 im Rand des Oberteiles 2.

Der untere Gehäuseteil 1 kann einen mittigen über seine Längsrichtung sich erstreckenden Steg 19 aufweisen, der zu seiner Versteifung dient. Vom Prinzip her ist es auch möglich, die beiden Halterungen an einer ihrer Längsseiten scharnierartig miteinander zu verbinden und dabei in einem Abstand festzuhalten, der in etwa ihrem Abstand gemäß Fig. 4 entspricht (in der Zeichnung nicht dargestellt).

Die perspektivische Ansicht der Fig. 5 zeigt, daß man an die Anlagefläche 1' des jeweils unteren Gehäuseteiles 1 einen Streifen 15 aus einem bevorzugt elastisch zusammendrückbaren Werkstoff, z.B. einem Kunststoffschaumstoff, einkleben kann. Dies ist dann zweckmäßig, wenn man eine im Durchmesser wesentlich kleinere Rohrleitung als in Fig. 4 dargestellt mit denselben Halterungen bestücken und dabei etwa den Verlauf der magnetischen Längsachsen 9 gemäß Fig. 4 ebenfalls erreichen will.

In einer der bevorzugten Anwendungen der Erfindung, nämlich an der Brennstoffzuleitung zu einem Verbrennungsmotor empfiehlt es sich, diese Module zwischen Treibstofffilter und Vergaser/Einspritzpumpe anzuordnen. Dies könnte auch zwischen Einspritzpumpe und Einspritzdüse erfolgen. Ein weiteres Einsatz- bzw. Anwendungsgebiet der Erfindung ist die Brennstoffzuführung in einer Heizungsanlage. Hier könnte die magnetische Ionisierung vor dem Ölfilter erfolgen, sofern eine Ölheizung vorgesehen ist. Es wäre auch bei einer Ölheizung die magnetische Ionisierung zwischen Ölfilter und Brennerdüse möglich. Im Fall einer Gasheizung erfolgt die magnetische Ionisierung der Gasleitung vor der Brennerdüse.

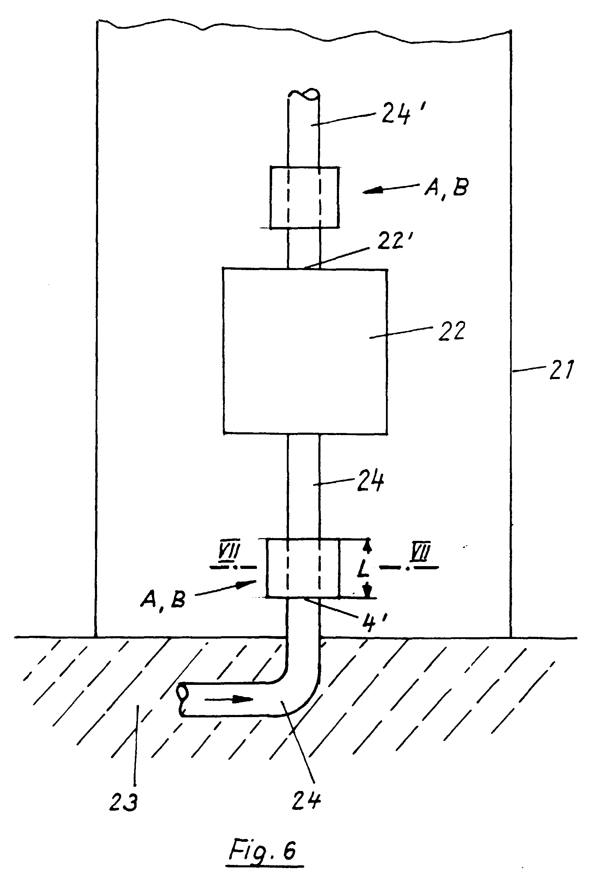

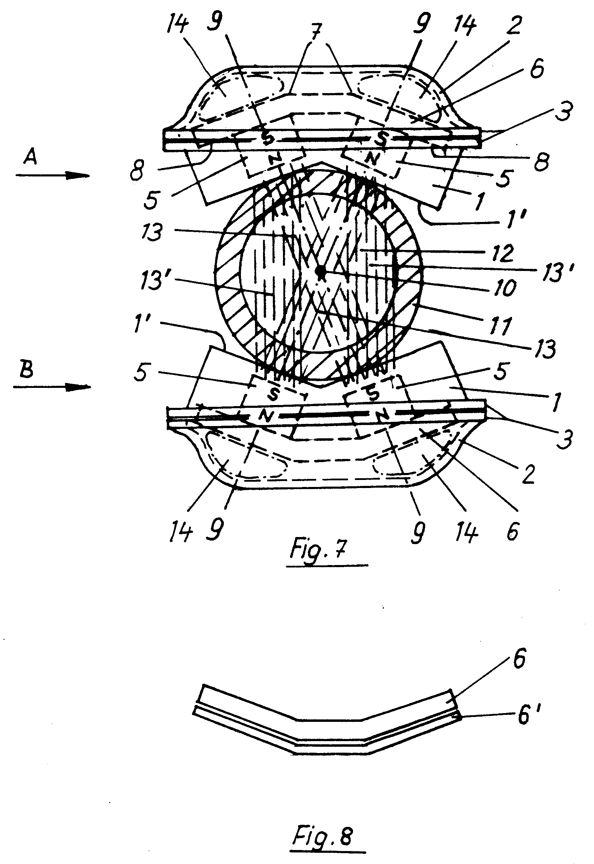

Fig. 6 zeigt ein Gebäude 21 mit einem Brauchwassererwärmer 22. Vom Erdboden 23 her wird mit der Leitung 24 Kaltwasser in das Gebäude 21 eingeführt. Diese Eingangsleitung 24 ist, bevorzugt im Bereich 24' innerhalb des Gebäudes, mit einer magnetischen Ionisierungsanordnung versehen, die aus zwei Modulen A, B zusammengesetzt ist (siehe im einzelnen Fig. 7). Falls es technisch/räumlich möglich ist, kann die Anordnung aus den beiden Modulen A, B auch an dem Abschnitt der Leitung 24 vorgesehen sein, der sich außerhalb des Gebäudes 21 befindet.

Die Kaltwasserleitung 24 führt zu dem Brauchwassererwärmer 24. Die hiervon abgehende, Warmwasser führende Ausgangsleitung 24' kann nahe ihrer Austrittsstelle 22' aus dem Brauchwassererwärmer 22 ebenfalls mit einer Modulanordnung A, B versehen sein. Hiermit können auch an dieser Stelle durch eine entsprechende magnetische Ionisierung Kalkablagerungen aus dem austretenden Warmwasser an den Leitungsinnenwandungen vermieden oder zumindest weitgehend reduziert werden.

Fig. 7 zeigt im Querschnitt den Aufbau einer Anordnung nach der Erfindung in Form einer Halterung, die aus zwei Modulen A, B besteht. Hinsichtlich Einzelheiten des Aufbaues wird auf die Erläuterung zu den Fig. 1 und 4 vrwiesen.

Die Polschuhe 6 sind als Stahlplatten von einer solchen Dicke, z.B. 5 mm, ausgebildet, daß sie die Magnetkraft der Permanentmagnete 5 nach oben abschirmen. Eine zusätzliche Abschirmung kann noch durch Ausfüllung der in Fig. 7 jeweils strichpunktiert angegebenen Bereiche 14 mittels sich über die Länge L erstreckender Stahlstücke erfolgen. Statt dessen könnte gemäß Fig. 8 der Polschuh 6 durch einen zusätzlichen Polschuh 6' in seiner magnetischen Abschirmwirkung verstärkt werden. Dabei ist der zusätzliche Polschuh 6' entsprechend dem Querschnitt des Polschuhes 6 abgewinkelt und besteht ebenfalls aus Stahl. Er besitzt die Länge des Polschuhes 6. Die beiden vorstehenden Ausführungen der Polschuhe gemäß Fig. 7 und 8 gelten für beide Module bzw. Halterungen A und B. Die Polschuhe sind entweder zwischen den beiden Gehäuseteilen 1, 2 eingeklemmt oder mit zumindest einem der Gehäuseteile durch eine Verklebung verbunden.

Alle neuen Merkmale und alle neuen Kombinationsmerkmale werden als erfindungswesentlich angesehen.

## Patentansprüche

1. Anordnung zur magnetischen Ionisierung von flüssigen oder gasförmigen Medien, dadurch gekennzeichnet, daß zwei einander gegenüberliegende Module (A, B) in Form von Halterungen bevorzugt gleicher Größe und Form mit an- oder eingebauten Permanentmagneten (5) aus von Seltenerdenmagneten oder Magneten aus einem Werkstoff, der die gleiche magnetische Flußstärke erbringt wie die Seltenerdenmagneten vorgesehen sind, daß diese Halterungen Anlageflächen (1') für eine das Medium führende Leitung (11) aufweisen und daß der oder die Permanentmagnet(e) der einen Halterung (A) mit ihrem N-Pol zu deren Anlagefläche (1') gerichtet ist bzw. sind, während der oder die Permanentmagnet(e) der anderen Halterung (B) mit ihrem S-Pol zu dessen Anlagefläche (1') gerichtet ist bzw. sind.

2. Anordnung nach Anspruch 1, dadurch gekennzeichnet, daß jedes Modul bzw. Halterung einen Polschuh (4) aufweist, der in seiner Querschnittsform etwa der konkaven Form der Anlagenflächen (1') entspricht und an dem die Permanentmagnete (5) angebracht, bevorzugt angeklebt sind.

3. Anordnung nach Anspruch 2, dadurch gekennzeichnet, daß die Polschuhe eine Stahlplatte von entsprechender magnetischer Abschirmung, z.B. einer Dicke von etwa 5 mm sind.

4. Anordnung nach einem oder mehreren der Ansprüche 1 bis 3, dadurch gekennzeichnet, daß in der Betriebslage beider Module bzw. Halterungen (A, B) deren Permanentmagnete (5) die Eckpunkte eines Rechteckes oder Quadrates bilden, wobei die Mittellängsachsen (9) dieser Permanentmagnete (5) in etwa zu einem gemeinsamen Mittelpunkt (10) des Rechteckes oder Quadrates hin gerichtet sind, der in der Betriebslage etwa der Mittellängsachse der der Rohrleitung (11) entspricht.

5. Anordnung nach Anspruch 4, dadurch gekennzeichnet, daß die Anlageflächen (1') der inneren Gehäuseteile (1) der Halterungen oder Module (A, B) konkav, insbesondere abgewinkelt ausgebildet sind.

6. Anordnung nach einem oder mehreren der Ansprüche 1 bis 5, dadurch gekennzeichnet, daß die Module bzw. Halterungen (A, B) einander gleiche aber voneinander separate Bauteile sind.

7. Anordnung nach einem oder mehreren der Ansprüche 1 bis 5, dadurch gekennzeichnet, daß zwei Module bzw. Halterungen (A, B) an einer Längsseite scharnierartig miteinander verbunden sind.

8. Anordnung nach einem oder mehreren der Ansprüche 1 bis 6, gekennzeichnet durch elastische Streifen von einer gewissen Dicke zum Befestigen an den mittleren Bereichen der Anlageflächen (1') der unteren Gehäuseteile (1).

9. Anordnung nach einem oder mehreren der Ansprüche 1 bis 8, gekennzeichnet durch Kabelbinder und Schlitze in einem der Gehäuseteile zur Aufnahme dieser Kabelbinder und Zusammenhalt beider Module in der Betriebslage.

10. Anordnung nach einem oder mehreren der Ansprüche 1 bis 12, gekennzeichnet durch die Verwendung zur magnetischen Ionisierung von flüssigen oder gasförmigen Treibstoffen, insbesondere von Treibstoffen eines Verbrennungsmotors.

11. Anordnung nach Anspruch 10, dadurch gekennzeichnet, daß die magnetische Ionisierung zwischen Treibstoffilter und Vergaser/Einspritzpumpe erfolgt.

12. Anordnung nach Anspruch 10, dadurch gekennzeichnet, daß die magnetische Ionisierung zwischen Einspritzpumpe und Einspritzdüse erfolgt.

13. Anordnung nach einem oder mehreren der Ansprüche 1 bis 9, gekennzeichnet durch die Verwendung zur magnetischen Ionisierung des Brennstoffes einer Heizung.

14. Anordnung nach Anspruch 13, dadurch gekennzeichnet, daß bei einer Ölheizung die magnetische Ionisierung vor dem Ölfilter erfolgt.

15. Anordnung nach Anspruch 13, dadurch gekennzeichnet, daß die magnetische Ionisierung zwischen Ölfilter und Brennerdüse erfolgt.

16. Anordnung nach Anspruch 13, dadurch gekennzeichnet, daß im Falle einer Gasheizung die magnetische Ionisierung der Gasleitung vor der Brennerdüse erfolgt.

17. Anordnung nach einem oder mehreren der Ansprüche 1 bis 9, gekennzeichnet durch die Verwendung zur Ionisierung von kalkhaltigem Wasser.

18. Anordnung nach Anspruch 17, dadurch gekennzeichnet, daß sie am Warmwasserausgang (2') eines Brauchwassererwärmers (2) vorgesehen ist.

19. Anordnung nach Anspruch 17 oder 18, dadurch gekennzeichnet, daß die Anordnung am Kaltwassereingang (4') einer Installationsanlage, insbesondere der Installationsanlage eines Gebäudes vorgesehen ist.

20. Anordnung nach einem oder mehreren der Ansprüche 1 bis 19, gekennzeichnet durch die Verwendung von Permanentmagneten aus Neodym-Eisen-Bor-Legierung (NdFeB) oder Samarium Cobalt, (SMCO5 oder SM2CO17).

21. Anordnung nach einem oder mehreren der Ansprüche 1 bis 20, gekennzeichnet durch Verstärkungen (14) der magnetischen Abschirmung der Polschuhe (6).

22. Anordnung nach Anspruch 21, dadurch gekennzeichnet, daß die Verstärkungen (14) auf den Außenseiten der Polschuhe (5) in Verlängerung der Längsachse (9) der Permanentmagnete (5) vorgesehen sind.

23. Anordnung nach Anspruch 21, dadurch gekennzeichnet, daß eine Verstärkung der magnetischen Abschirmung der Polschuhe (6) in Form eines zusätzlichen Polschuhes (6') vorgesehen ist, dessen Querschnittsform der Querschnittsform des Polschuhes (6) angepaßt ist.
